# EUROPEAN PATENT SPECIFICATION

(11) **EP 3 417 008 B1**
(45) Date of publication and mention of the grant of the patent: **16.03.2022**
(21) Application number: 17705674.4
(22) Date of filing: 22.02.2017
(51) Int. Cl.: C08L 33/12, C08L 33/08, C08J 3/00

(54) **POLYMER COMPOSITION COMPRISING A (METH)ACRYLIC POLYMER HAVING GOOD OPTICAL PROPERTIES AND HEAT RESISTANCE**
POLYMERZUSAMMENSETZUNG ENTHALTEND EINEM (METH)ACRYLPOLYMER, MIT GUTEN OPTISCHEN EIGENSCHAFTEN UND GUTER WÄRMEBESTÄNDIGKEIT
COMPOSITION POLYMÈRE COMPRENANT UN POLYMÈRE (MÉTH)ACRYLIQUE AYANT DE BONNES PROPRIÉTÉS OPTIQUES ET BONNE RÉSISTANCE À LA CHALEUR

(30) Priority: 21.03.2016 EP 16161421
(43) Date of publication of application: 26.12.2018
(73) Proprietor: SABIC Global Technologies B.V., 4612 PX Bergen op Zoom (NL)
(72) Inventor: MUTHUKRISHNAN, Sharmila, 6160 GA Geleen (NL); MITRA, Susanta, Bangalore Karnataka 562125 (IN); NAGARAJACHAR, Sathish, 6160 GA Geleen (NL); SIKDER, Arun, 61610 GA Geleen (NL)
(74) Representative: Sabic Intellectual Property Group
(86) International application number: PCT/EP2017/054058
(87) International publication number: WO 2017/162393

(56) References cited:
- WO-A1-98/28365
- WO-A1-2011/050521
- DE-A1- 2 024 940
- US-A- 4 647 620

## Description

The present invention relates to a polymer composition comprising a (meth)acrylic polymer.

The invention also relates to articles comprising such polymer composition.

Polymer compositions comprising (meth)acrylic polymers are well-known for their advantageous properties. These advantageous properties include optical properties such as transparency, weathering resistance, hardness, colourability and the ability to be processed into suitable shapes. Polymer composition comprising (meth)acrylic polymers may be thermoplastic, allowing to be moulded into the desired shapes by melt processing, such as via melt extrusion and injection moulding. This allows for a large variety of shapes to be obtained having uniform dimensions and properties. WO98/28365, US4647620 and DE2024940 describe, for example, polymer compositions comprising (meth)acrylic polymers and styrene-maleic anhydride copolymers.

Due to these favourable properties, (meth)acrylic polymers find extensive usage in for example exterior applications for electronic displays, automotive exterior applications such as lighting components and window applications, as well as in architectural and constructional applications.

A particular property that is applicable in such exterior applications is the scratch resistance. The appearance of scratches not only reduces the durability of products, but also their aesthetics. For that reason, a certain scratch resistance is required.

A further property that is applicable in certain applications is heat resistance. In order to withstand the conditions to which such applications are exposed during their lifetime whilst still maintaining the desired combination of properties, a certain heat resistance is required.

In particular, there is a need for polymer compositions that provide for a good balance of both heat resistance and scratch resistance, preferably whilst still providing the advantageous properties such as transparency, processability, colourability, weathering resistance and hardness.

Various attempts have been presented trying to achieve such balance of properties. For example in US8076435, a copolymer is produced using methyl methacrylate and tricyclodecanyl hydroxymethacrylate. A disadvantage hereof is that a dedicated polymerisation needs to be performed using such specific formulation of monomer and comonomer. This is undesirable from amongst others the viewpoint of process efficiency in polymerisation.

Thus, there remains a need for a polymer composition of having a desired high heat resistance and good scratch resistance, whilst preferably maintaining good optical properties such as transparency and good surface properties.

This has now been achieved according to the present invention by a polymer composition comprising
(a) 60.0-80.0 wt% of a (meth)acrylic polymer; and
(b) 20.0-40.0 wt% of a copolymer prepared using styrene and maleic anhydride with regard to the total weight of (a) and (b), the total of (a) and (b) being 100 wt%; wherein the polymer composition is prepared by melt mixing of a mixture comprising (a) and (b) in a melt extruder, wherein the melt extruder comprises:
   (i) an inlet for feeding the mixture;
   (ii) a barrel comprising one or more extruder screw(s) each comprising a tip;
   (iii) one or more opening(s) for removing the obtained polymer composition from the extruder; and
   (iv) a volume of space in the area between the tip(s) of the extruder screw(s) and the opening(s) for removing the obtained polymer composition
wherein during the melt mixing the temperature of the polymer composition in the volume of space (iv) is ≥ 235°C and ≤ 255°C, wherein the (meth)acrylic polymer (a) is selected from polymethylmethacrylate (PMMA), polybutylmethacrylate (PBMA), poly(methylmethacrylate-ethylacrylate) (PMMA-co-EA) or polyethyl acrylate (PEA).

Alternatively, such polymer composition may comprise 60.0-75.0 wt% of a (meth)acrylic polymer, or 65.0-75.0 wt%, with regard to the total weight of the polymer composition. The polymer composition may alternatively comprise 25.0-40.0 wt% of a copolymer prepared using styrene and maleic anhydride, or 25.0-35.0 wt%, with regard to the total weight of the polymer composition.

Such polymer composition has a desirable scratch resistance and a desirable heat resistance.

It is preferred that the polymer composition comprises
(a) 65.0-75.0 wt% of a (meth)acrylic polymer; and
(b) 25.0-35.0 wt% of a copolymer prepared using styrene and maleic anhydride
with regard to the total weight of (a) and (b).

A suitable indicator for the scratch resistance may for example be the residual scratch depth as determined in accordance with ASTM D7187-10.

Suitable indicators for the heat resistance in the context of the present invention may for example be the heat deflection temperature, also referred to as HDT, as determined in accordance with ISO 75-2 (2013), method B, where a higher HDT may be an indicator for a higher heat resistance; the glass transition temperature, also referred to as T_{g}, as determined in accordance with ISO 11357-2 (2013), where a higher T_{g} may be an indicator for a higher heat resistance; and/or the Vicat B softening temperature was determined in accordance with ISO 306 (2013), where a higher Vicat B may be an indicator for a higher heat resistance.

Suitable melt extruders for preparation of the polymer compositions are well known. It is preferred that the melt extruder comprises at least two extruder screws wherein the extruder screws are co-rotating or counter-rotating, and wherein the melt extruder is designed such to ensure the feed mixture to be transported from the feed inlet to the opening for removing the obtained polymer composition and to ensure the feed mixture to be subjected to sufficient heat to result in the polymer composition in the volume of space (iv) to have a temperature of ≥ 235°C and ≤ 255°C. It is preferred that the melt extruder comprises two extruder screws wherein the extruder screws are co-rotating. Heat may be supplied to the feed mixture in the melt extruder by in the form of shear induced by rotation of the extruder screws and/or by supply of external heat such as via a heating jacket positioned around the barrel of the melt extruder.

Preferably, the temperature of the polymer composition during the melt mixing in the volume of space (iv) is ≥ 235°C and ≤ 250°C.

Preferably, the temperature of the polymer composition during the melt mixing in the volume of space (iv) is ≥ 235°C and ≤ 245°C.

Preferably, the temperature of the polymer composition during the melt mixing in the volume of space (iv) is ≥ 240°C and ≤ 250°C.

A polymer composition according to the present invention may for example by prepared via a process comprising the following steps in this order:
- continuously feeding the mixture comprising (a) and (b) and optionally further ingredients to the inlet (i) of a melt extruder;
- subjecting the mixture to rotation of the screws such as to result in the transportation of the mixture towards the opening(s) (iii);
- continuously removing the obtained polymer composition from the opening(s) (iii); and
- cooling the obtained polymer composition to obtain a solid composition.

In addition to inlet (i), the melt extruder may optionally have further inlet(s) for feeding the mixture of ingredients to the melt extruder.

The obtained polymer composition may be removed from the extruder from the opening(s) (iii), wherein the opening(s) may be present in the form of circular openings or holes. The obtained polymer composition may leave the melt extruder in the form of strands, wherein the polymer composition upon leaving the extruder is in molten state. The molten strands leaving the extruder may be subjected to cooling to a temperature below the melting point of the polymer composition. For example, the molten strands may be cooled to below 100°C. this cooling may be achieved by subjecting the molten strands to water having a temperature of for example ≤ 50°C.

It is preferred that the process for preparation of the polymer composition according to the invention is a continuous process.

The (meth)acrylic polymer (a) is selected from polymethylmethacrylate (PMMA), polybutylmethacrylate (PBMA), poly(methylmethacrylate-ethylacrylate (PMMA-co-EA), or polyethyl acrylate (PEA). It is preferred that the (meth)acrylic polymer (a) is polymethylmethacrylate (PMMA).

The PMMA may for example have a melt mass flow rate as determined in accordance with ISO 1133-1 (2011), at 230°C using a load of 3.80 kg, of ≥0.1 and ≤ 20.0 g/10 min, alternatively ≥0.5 and ≤ 10.0 g/10 min, alternatively ≥1.0 and ≤ 5.0 g/10 min. The use of such PMMA in the preparation of a polymer composition according to the invention may for example result in a polymer composition having such flow properties allowing for the production of transparent articles of the polymer composition via injection moulding.

The copolymer prepared using styrene and maleic anhydride may also be referred to as a SMA copolymer (styrene-maleic anhydride copolymer).

The SMA copolymer may for example comprise ≥10 wt% and ≤ 50 wt% of polymer units derived from maleic anhydride, with regard to the total weight of the copolymer prepared using styrene and maleic anhydride, alternatively ≥ 15 wt% and ≤ 40 wt%, alternatively ≥ 20 wt% and ≤ 35 wt%, alternatively ≥ 20 wt% and ≤ 30 wt%.

The SMA copolymer may for example have an intrinsic viscosity, also referred to as IV, of ≥ 0.20 and ≤ 1.00 dl/g, alternatively ≥ 0.30 and ≤ 0.75 dl/g, alternatively ≥ 0.40 and ≤ 0.60 dl/g, as determined in accordance with ISO 1628-1:2009.

The SMA copolymer may for example have a Vicat softening temperature of ≥ 100°C, alternatively ≥ 120°C, alternatively ≥ 140°C, such as ≥ 140°C and ≤ 180°C, as determined in accordance with ISO 306 (2013), method B120.

In a preferred embodiment, the polymer composition according to the invention comprises a copolymer prepared using styrene and maleic anhydride comprising ≥ 20 wt% and ≤ 35 wt% of polymer units derived from maleic anhydride, with regard to the total weight of the copolymer prepared using styrene and maleic anhydride, and wherein the (meth)acrylic polymer (a) is polymethylmethacrylate (PMMA).

The polymer composition may optionally comprise further ingredients such as antioxidants. These antioxidants may for example be phenolic antioxidants and/or phosphite antioxidants. A stabiliser composition comprising one or more phenolic antioxidant(s) and one or more phosphite antioxidant(s) may for example be used. Phenolic antioxidants may for example be selected from monophenolic antioxidants, i.e. antioxidants containing one phenolic group per molecule, bisphenolic antioxidants i.e. antioxidants containing two phenolic groups per molecule, and polyphenolic antioxidants, i.e. antioxidants containing more than two phenolic groups per molecule, including 1,1,3-tris(2-methyl-4-hydroxy-5-t-butyl phenyl) butane, pentaerythritol tetrakis(3-(3,5-di-t-butyl-4-hydroxyphenyl)propionate, 1,3,5-trimethyl-2,4,6-tris(3,5-di-t-butyl-4-hydroxybenzyl)benzene, 1,3,5-tris(3,5-di-t-butyl-4-hydroxybenzyl)isocyanurate, and 1,3,5-tris(4-t-butyl-2,6-dimethyl-3-hydroxybenzyl)isocyanurate. Preferably, the phenolic antioxidant is pentaerythritol tetrakis(3-(3,5-di-t-butyl-4-hydroxyphenyl)propionate.

Phosphite antioxidants may for example be selected from trisnonylphenyl phosphite, trilauryl phosphite, tris(2,4-di-t-butylphenyl)phosphite, triisodecyl phosphite, diisodecyl phenyl phosphite, diphenyl isodecyl phosphite, and triphenyl phosphite. Preferably, the phosphite antioxidant is tris(2,4-di-t-butylphenyl)phosphite.

Preferably, the stabiliser that is introduced to the melt extruder comprises pentaerythritol tetrakis(3-(3,5-di-t-butyl-4-hydroxyphenyl)propionate.

The polymer composition may for example comprise ≥ 0.10 and ≤ 1.00 wt% of antioxidant, with regard to the total weight of the polymer composition, preferably ≥ 0.20 and ≤ 0.50 wt%.

The polymer composition may optionally comprise further ingredients such as heat stabilisers. The heat stabilisers may for example be a nitrogen-containing compounds. Such nitrogen-containing heat stabilisers may for example be one or more selected from the list consisting of aminotriazine compounds, allantoin, hydrazides, polyamids, melamines, and/or mixtures thereof.

The nitrogen-containing compound can be a low molecular weight compound or a high molecular weight compound. Examples of low molecular weight nitrogen-containing compounds can include an aliphatic amine (e.g., monoethanolamine, diethanolamine, and tris-(hydroxymethyl)aminomethane), an aromatic amine (e.g., an aromatic secondary or tertiary amine such as o-toluidine, p-toluidine, p-phenylenediamine, o-aminobenzoic acid, p-aminobenzoic acid, ethyl o-aminobenzoate, or ethyl p-aminobenzoate), an imide compound (e.g., phthalimide, trimellitimide, and pyromellitimide), a triazole compound (e.g., benzotriazole), a tetrazole compound (e.g., an amine salt of 5,5'-bitetrazole, or a metal salt thereof), an amide compound (e.g., a polycarboxylic acid amide such as malonamide or isophthaldiamide, and p-aminobenzamide), hydrazine or a derivative thereof (e.g., an aliphatic carboxylic acid hydrazide such as hydrazine, hydrazone, a carboxylic acid hydrazide (stearic hydrazide, 12-hydroxystearic hydrazide, adipic dihydrazide, sebacic dihydrazide, or dodecane diacid dihydrazide; and an aromatic carboxylic acid hydrazide such as benzoic hydrazide, naphthoic hydrazide, isophthalic dihydrazide, terephthalic dihydrazide, naphthalenedicarboxylic dihydrazide, or benzenetricarboxylic trihydrazide)), a polyaminotriazine (e.g., guanamine or a derivative thereof, such as guanamine, acetoguanamine, benzoguanamine, succinoguanamine, adipoguanamine, 1,3,6-tris(3,5-diamino-2,4,6-triazinyl)hexane, phthaloguanamine or CTU-guanamine, melamine or a derivative thereof (e.g., melamine, and a condensate of melamine, such as melam, melem or melon)), a salt of a polyaminotriazine compound containing melamine and a melamine derivative with an organic acid, a salt of a polyaminotriazine compound containing melamine and a melamine derivative with an inorganic acid, uracil or a derivative thereof (e.g., uracil, and uridine), cytosine or a derivative thereof (e.g., cytosine, and cytidine), guanidine or a derivative thereof (e.g., a non-cyclic guanidine such as guanidine or cyanoguanidine; and a cyclic guanidine such as creatinine), and urea or a derivative thereof.

The polymer composition may for example comprise ≥ 0.10 and ≤ 1.00 wt% of heat stabilisers, with regard to the total weight of the polymer composition, preferably ≥ 0.20 and ≤ 0.50 wt%.

In a certain preferred embodiment, the present invention relates to a polymer composition comprising:
(a) 60.0-80.0 wt% of polymethylmethacrylate (PMMA); and
(b) 20.0-40.0 wt% of a copolymer prepared using styrene and maleic anhydride comprising ≥ 10 wt% and ≤ 50 wt% of polymer units derived from maleic anhydride;
with regard to the total weight of (a) and (b), the total of (a) and (b) being 100 wt%; wherein the polymer composition is prepared by melt mixing of a mixture comprising (a) and (b) in a melt extruder, wherein the melt extruder comprises:
(i) an inlet for feeding the mixture;
(ii) a barrel comprising one or more extruder screw(s) each comprising a tip;
(iii) one or more opening(s) for removing the obtained polymer composition from the extruder; and
(iv) a volume of space in the area between the tip(s) of the extruder screw(s) and the opening(s) for removing the obtained polymer composition

wherein during the melt mixing the temperature of the polymer composition in the volume of space (iv) is ≥ 235°C and ≤ 255°C; and
wherein an article produced using the polymer composition has:
   - a luminous transmittance as determined in accordance with ASTM D1003 (2000) of ≥ 90.0 %;
   - a haze as determined in accordance with ASTM D1003 (2000) of ≤ 2.3 %;
   - a glass transition temperature as determined in accordance with ISO 11357-2 (2013) of ≥ 125°C;
   - a temperature of deflection under load as determined in accordance with ISO 75-2 (2013), method B of ≥ 105°C; and/or
   - a Vicat B softening temperature as determined in accordance with ISO 306 (2013), using a force of 50 N and a heating rate of 120 K/h, of ≥ 110°C.

Such polymer composition has a desirable balance of high heat resistance, good scratch resistance and good optical properties.

The invention also relates in an embodiment to an article produced using the polymer composition according to the invention, wherein the article has:
- a luminous transmittance as determined in accordance with ASTM D1003 (2000) of ≥ 90.0 %, preferably ≥ 91.0 %;
- a haze as determined in accordance with ASTM D1003 (2000) of ≤ 2.3 %, preferably ≤ 2.0 %;
- a glass transition temperature as determined in accordance with ISO 11357-2 (2013) of ≥ 125°C, preferably ≥ 130°C;
- a temperature of deflection under load as determined in accordance with ISO 75-2 (2013), method B of ≥ 105°C, preferably ≥ 110°C; and/or
- a Vicat B softening temperature as determined in accordance with ISO 306 (2013), using a force of 50 N and a heating rate of 120 K/h, of ≥ 110°C, preferably ≥115°C.

It is preferred that such article has a residual scratch depth as determined in accordance with ASTM 7187-10 of ≤ 1500 nm, preferably ≤ 1050 nm, more preferably ≤ 1000 nm.

The invention will now be illustrated by the following non-limiting examples.

**Table I - Materials used**

| | |
|---|---|
| PMMA | SABIC 20HR, a polymethylmethacrylate (meth)acrylic polymer, obtainable from SABIC |
| SMA | XIRAN SZ26120, a copolymer prepared using styrene and maleic anhydride, comprising 26 wt% of polymer units derived from maleic anhydride, obtainable from Polyscope, The Netherlands |

Polymer compositions were prepared using a Coperion ZSK25 co-rotating intermeshing twin-screw melt extruder using for each of the examples the composition of ingredients as presented in table II. The extruder was operated at a speed of 300 rpm. The material feed rate was 8 kg/h.

For examples 1-8, the extruder settings were such that the temperature of the polymer composition in the volume of space in the area between the tips of the extruder screws and the openings for removing the obtained polymer composition was 235°C.

For example 9, the extruder settings were such that the temperature of the polymer composition in the volume of space in the area between the tips of the extruder screws and the openings for removing the obtained polymer composition was 230°C.

For example 10, the extruder settings were such that the temperature of the polymer composition in the volume of space in the area between the tips of the extruder screws and the openings for removing the obtained polymer composition was 260°C.

The material leaving the extruder in molten circular strands having a diameter of ca. 4 mm was cooled to solidification by conducting the strands via a water bath in which the water in maintained at a temperature of 20-40°C, upon which the solidified strands were cut into pellets having a length of ca. 4 mm.

**Table II - compositions for extrusion**

| Example | PMMA | SMA |
|---|---|---|
| 1 (I) | 80.0 | 20.0 |
| 2 (I) | 70.0 | 30.0 |
| 3 (I) | 60.0 | 40.0 |
| 4 (C) | 50.0 | 50.0 |
| 5 (C) | 40.0 | 60.0 |
| 6 (C) | 20.0 | 80.0 |
| 7 (C) | 100.0 | 0.0 |
| 8 (C) | 0.0 | 100.0 |
| 9 (C) | 70.0 | 30.0 |
| 10 (C) | 70.0 | 30.0 |

The values in table II are in parts by weight. Examples 1-3 relate to the present invention. Examples 4-10 are included for comparative purposes.

| | | Example | | | | | | | | | |
|---|---|---|---|---|---|---|---|---|---|---|---|
| Property | Unit | 1 | 2 | 3 | 4 | 5 | 6 | 7 | 8 | 9 | 10 |
| T_{g} | °C | 126 | 129 | 135 | 140 | 143 | 150 | 116 | 158 | 129 | 130 |
| HDT | °C | 106 | 110 | 115 | 118 | 122 | 130 | 99 | 124 | 111 | 111 |
| Vicat B | °C | 113 | 118 | 123 | 128 | 131 | 105 | 142 | 149 | 117 | 117 |
| Transmission | % | 91.1 | 91.1 | 90.8 | 89.5 | 90.4 | 90.1 | 91.0 | 88.9 | 89.0 | 91.5 |
| Haze | % | 2.2 | 1.9 | 2.0 | 3.4 | 2.0 | 1.5 | 2.5 | 1.8 | 4.1 | 2.3 |
| Impact strength | kJ/m² | 2.15 | 2.24 | 2.08 | 2.15 | 2.24 | 2.08 | 2.10 | 1.94 | 2.30 | 2.30 |
| Tensile strength | MPa | 71.6 | 72.0 | 68.0 | 68.0 | 54.0 | 41.0 | 71.5 | 19.0 | 76.0 | 75.0 |
| Residual depth | nm | 1370 | 1428 | 1480 | 1538 | 1556 | 1685 | 1304 | 1948 | 1581 | 1384 |
| Hardness | GPa | 0.28 | 0.29 | 0.28 | 0.28 | 0.28 | 0.29 | 0.26 | 0.29 | 0.28 | 0.28 |
| Strand stability | | good | good | good | good | good | good | good | good | good | poor |

Wherein:
T_{g} is the glass transition temperature as determined in accordance with ISO 11357-2 (2013).

HDT is the heat deflection temperature as determined as the temperature of deflection under load, in accordance with ISO 75-2 (2013), method B.

Vicat B softening temperature was determined in accordance with ISO 306 (2013), using a force of 50 N and a heating rate of 120 K/h.

Transmission is the luminous transmittance as determined in accordance with ASTM D1003 (2000).

Haze was determined in accordance with ASTM D1003 (2000).

Impact strength is the Izod impact strength as determined in accordance with ISO 180 (2000), notch type A, at 23°C.

Tensile strength was determined in accordance with ISO 527-1 (2012).

Residual depth is the depth of scratches induced by the nano-scratching method as determined in accordance with ASTM 7187-10.

Hardness is determined in as the indentation hardness in accordance with ISO 14577-1 (2015). Hardness was determined using a Berkovich indenter with a tip diameter of 20 nm. Indentations were made with a constant strain rate of 0.05 s⁻¹ and indentation depth of 2µm.

Strand stability is an indicator for the possibility to guide strands of the molten material, the strands typically being circular and having a diameter of 3-5 mm, via a water bad where solidification takes place over one or more guiding rolls into a rotary cutter where the solid strands are cut into pellets. Where such guidance does not result in periodic breaking of strands, the strand stability is indicated to be good. Where breaking of strands occurs, the strand stability is indicated as poor.

During the experiment of example 10, it was not possible to process the molten material leaving the melt extruder in strands and cooling the strands in the water bath. Breaking of stands occurred. This may be attributable to degradation of the polymer due to the high temperature conditions used in example 10.

The presented examples indicate that a polymer composition according to the present invention, comprising 60.0-80.0 wt% of a (meth)acrylic polymer; and 20.0-40.0 wt% of a copolymer prepared using styrene and maleic anhydride, which is prepared by melt mixing in a melt extruder at a temperature of ≥ 235°C and ≤ 255°C, has a desirably good combination of heat resistance and scratch resistance, combined with amongst other good optical properties and impact strength.

## Claims

1. Polymer composition comprising
(a) 60.0-80.0 wt% of a (meth)acrylic polymer; and
(b) 20.0-40.0 wt% of a copolymer prepared using styrene and maleic anhydride with regard to the total weight of (a) and (b), the total of (a) and (b) being 100 wt%; wherein the polymer composition is prepared by melt mixing of a mixture comprising (a) and (b) in a melt extruder, wherein the melt extruder comprises:
(i) an inlet for feeding the mixture;
(ii) a barrel comprising one or more extruder screw(s) each comprising a tip;
(iii) one or more opening(s) for removing the obtained polymer composition from the extruder; and
(iv) a volume of space in the area between the tip(s) of the extruder screw(s) and the opening(s) for removing the obtained polymer composition
wherein during the melt mixing the temperature of the polymer composition in the volume of space (iv) is ≥ 235°C and ≤ 255°C
wherein the (meth)acrylic polymer (a) is selected from polymethylmethacrylate (PMMA), polybutylmethacrylate (PBMA), poly(methylmethacrylate-ethylacrylate (PMMA-co-EA), or polyethyl acrylate (PEA).

2. Polymer composition according claim 1 wherein the (meth)acrylic polymer (a) is polymethylmethacrylate (PMMA).

3. Polymer composition according to any one of claims 1-2, wherein the copolymer prepared using styrene and maleic anhydride comprises ≥ 10 wt% and ≤ 50 wt% of polymer units derived from maleic anhydride, with regard to the total weight of the copolymer prepared using styrene and maleic anhydride.

4. Polymer composition according to any one of claims 1-3, wherein the copolymer prepared using styrene and maleic anhydride comprises ≥ 20 wt% and ≤ 35 wt% of polymer units derived from maleic anhydride, with regard to the total weight of the copolymer prepared using styrene and maleic anhydride, and wherein the (meth)acrylic polymer (a) is polymethylmethacrylate (PMMA).

5. Polymer composition according to any one of claims 1-4, wherein the polymer composition comprises
(a) 65.0-75.0 wt% of a (meth)acrylic polymer; and
(b) 25.0-35.0 wt% of a copolymer prepared using styrene and maleic anhydride with regard to the total weight of (a) and (b).

6. Polymer composition according to any one of claims 1-5 comprising 0.10-1.00 wt% of one or more antioxidants and/or 0.10-1.00 wt% of one or more heat stabilisers with regard to the total weight of the polymer composition.

7. Polymer composition according to any one of claims 1-6, wherein the melt extruder comprises at least two extruder screws wherein the extruder screws are co-rotating or counter-rotating, and wherein the melt extruder is designed such to ensure the feed mixture to be transported from the feed inlet to the opening for removing the obtained polymer composition and to ensure the feed mixture to be subjected to sufficient heat to result in the polymer composition in the volume of space (iv) to have a temperature of ≥ 235°C and ≤ 255°C.

8. Polymer composition according to any one of claims 1-7, wherein during the melt mixing the temperature of the polymer composition in the volume of space (iv) is ≥ 240°C and ≤ 250°C.

9. Article produced using the polymer composition according to any one of claims 1-8, wherein the article has:
• a luminous transmittance as determined in accordance with ASTM D1003 (2000) of ≥ 90.0 %;
• a haze as determined in accordance with ASTM D1003 (2000) of ≤ 2.3 %;
• a glass transition temperature as determined in accordance with ISO 11357-2 (2013) of ≥ 125°C;
• a temperature of deflection under load as determined in accordance with ISO 75-2 (2013), method B of ≥ 105°C; and/or
• a Vicat B softening temperature as determined in accordance with ISO 306 (2013), using a force of 50 N and a heating rate of 120 K/h, of ≥ 110°C.

10. Article according to claim 9, wherein the article has a residual scratch depth as determined in accordance with ASTM 7187-10 of ≤ 1500 nm.

## Patentansprüche

1. Polymerzusammensetzung, umfassend
(a) 60,0-80,0 Gew.-% eines (Meth)acrylpolymers; und
(b) 20,0-40,0 Gew.-% eines Copolymers, das unter Verwendung von Styrol und Maleinsäureanhydrid hergestellt wird, hinsichtlich des Gesamtgewichts von (a) und (b), wobei der Gesamtbetrag aus (a) und (b) 100 Gew.-% beträgt;
wobei die Polymerzusammensetzung durch Schmelzmischen eines Gemischs, umfassend (a) und (b), in einem Schmelzextruder hergestellt wird, wobei der Schmelzextruder Folgendes umfasst:
(i) einen Einlass zum Zuführen des Gemischs;
(ii) einen Zylinder, umfassend eine oder mehrere Extruderschnecke(n), die jeweils eine Spitze umfassen;
(iii)eine oder mehrere Öffnung(en) zum Entfernen der erhaltenen Polymerzusammensetzungen aus dem Extruder; und
(iv) ein Raumvolumen in dem Bereich zwischen der/den Spitz(en) der Extruderschnecke(n) und der Öffnung(en) zum Entfernen der erhaltenen Polymerzusammensetzung,
wobei während des Schmelzmischens die Temperatur der Polymerzusammensetzung in dem Raumvolumen (iv) ≥ 235 °C und ≤ 255 °C beträgt,
wobei das (Meth)acrylpolymer (a) ausgewählt ist aus Polymethylmethacrylat (PMMA), Polybutylmethacrylat (PBMA), Poly(methylmethacrylat-ethylacrylat (PMMA-co-EA) oder Polyethylacrylat (PEA).

2. Polymerzusammensetzung nach Anspruch 1, wobei das (Meth)acrylpolymer (a) Polymethylmethacrylat (PMMA) ist.

3. Polymerzusammensetzung nach einem der Ansprüche 1-2, wobei das Copolymer, das unter Verwendung von Styrol und Maleinsäureanhydrid hergestellt wird, ≥ 10 Gew.-% und ≤ 50 Gew.-% von Polymereinheiten umfasst, die von Maleinsäureanhydrid abgeleitet sind, hinsichtlich des Gesamtgewichts des Copolymers, das unter Verwendung von Styrol und Maleinsäureanhydrid hergestellt wird.

4. Polymerzusammensetzung nach einem der Ansprüche 1-3, wobei das Copolymer, das unter Verwendung von Styrol und Maleinsäureanhydrid hergestellt wird, ≥ 20 Gew.-% und ≤ 35 Gew.-% von Polymereinheiten umfasst, die von Maleinsäureanhydrid abgeleitet sind, hinsichtlich des Gesamtgewichts des Copolymers, das unter Verwendung von Styrol und Maleinsäureanhydrid hergestellt wird, und wobei das (Meth)acrylpolymer (a) Polymethylmethacrylat (PMMA) ist.

5. Polymerzusammensetzung nach einem der Ansprüche 1-4, wobei die Polymerzusammensetzung Folgendes umfasst
(a) 65,0-75,0 Gew.-% eines (Meth)acrylpolymers; und
(b) 25,0-35,0 Gew.-% eines Copolymers, das unter Verwendung von Styrol und Maleinsäureanhydrid hergestellt wird, hinsichtlich des Gesamtgewichts von (a) und (b).

6. Polymerzusammensetzung nach einem der Ansprüche 1-5, umfassend 0,10-1,00 Gew.-% von einem oder mehrere Antioxidantien und/oder 0,10-1,00 Gew.-% von einem oder mehreren Wärmestabilisatoren hinsichtlich des Gesamtgewichts der Polymerzusammensetzung.

7. Polymerzusammensetzung nach einem der Ansprüche 1-6, wobei der Schmelzextruder mindestens zwei Extruderschnecken umfasst, wobei die Extruderschnecken gleichsinnig oder gegensinnig rotierend sind, und wobei der Schmelzextruder konstruiert ist, um sicherzustellen, dass das Zufuhrgemisch von dem Zufuhreinlass zu der Öffnung transportiert wird, zum Entfernen der erhaltenen Polymerzusammensetzung, und um sicherzustellen, dass das Zufuhrgemisch ausreichend Wärme ausgesetzt wird, was darin resultiert, dass die Polymerzusammensetzung im Raumvolumen (iv) eine Temperatur von ≥ 235 °C und ≤ 255 °C aufweist.

8. Polymerzusammensetzung nach einem der Ansprüche 1-7, wobei während des Schmelzmischens die Temperatur der Polymerzusammensetzung im Raumvolumen (iv) ≥ 240 °C und ≤ 250 °C beträgt.

9. Artikel, der unter Verwendung der Polymerzusammensetzung nach einem der Ansprüche 1-8 produziert wird, wobei der Artikel Folgendes hat:
• eine Lichtdurchlässigkeit, bestimmt gemäß ASTM D1003 (2000), von ≥ 90,0 %;
• eine Trübung, bestimmt gemäß ASTM D1003 (2000), von ≤ 2,3 %;
• eine Glasübergangstemperatur, bestimmt gemäß ISO 11357-2 (2013), von ≥ 125 °C;
• eine Formbeständigkeitstemperatur unter Last, bestimmt gemäß ISO 75-2 (2013), Verfahren B, von ≥ 105 °C; und/oder
• eine Vicat-B-Erweichungstemperatur, bestimmt gemäß ISO 306 (2013), unter Verwendung einer Kraft von 50 N und Heizrate von 120 K/h, von ≥ 110 °C.

10. Artikel nach Anspruch 9, wobei der Artikel eine verbleibende Kratzertiefe, bestimmt gemäß ASTM 7187-10, von ≤ 1500 nm hat.

## Revendications

1. Composition de polymère comprenant
(a) 60,0 à 80,0 % en poids d'un polymère (méth)acrylique ; et
(b) 20,0 à 40,0 % en poids d'un copolymère préparé à l'aide de styrène et d'anhydride maléique vis-à-vis du poids total de (a) et (b), le total de (a) et (b) étant de 100 % en poids ;
dans laquelle la composition de polymère est préparée par mélange à l'état fondu d'un mélange comprenant (a) et (b) dans une extrudeuse à l'état fondu, dans laquelle l'extrudeuse à l'état fondu comprend :
(i) une entrée pour l'apport du mélange ;
(ii) un fourreau comprenant au moins une vis d'extrudeuse comprenant individuellement une pointe ;
(iii) au moins une ouverture pour retirer la composition de polymère obtenue de l'extrudeuse ; et
(iv) un volume d'espace dans la zone entre l'au moins une pointe de l'au moins une vis d'extrudeuse et l'au moins une ouverture pour retirer la composition de polymère obtenue
dans laquelle pendant le mélange à l'état fondu la température de la composition de polymère dans le volume d'espace (iv) est ≥ 235 °C et ≤ 255 °C
dans laquelle le polymère (méth)acrylique (a) est choisi parmi le polyméthacrylate de méthyle (PMMA), le polyméthacrylate de butyle (PBMA), le poly(méthacrylate de méthyle-acrylate d'éthyle) (PMMA-co-EA), ou le polyacrylate d'éthyle (PEA).

2. Composition de polymère selon la revendication 1 dans laquelle le polymère (méth)acrylique (a) est le polyméthacrylate de méthyle (PMMA).

3. Composition de polymère selon l'une quelconque des revendications 1 à 2, dans laquelle le copolymère préparé à l'aide de styrène et d'anhydride maléique comprend ≥ 10 % en poids et ≤ 50 % en poids de motifs de polymère dérivés d'anhydride maléique, vis-à-vis du poids total du copolymère préparé à l'aide de styrène et d'anhydride maléique.

4. Composition de polymère selon l'une quelconque des revendications 1 à 3, dans laquelle le copolymère préparé à l'aide de styrène et d'anhydride maléique comprend ≥ 20 % en poids et ≤ 35 % en poids de motifs de polymère dérivés d'anhydride maléique, vis-à-vis du poids total du copolymère préparé à l'aide de styrène et d'anhydride maléique, et dans laquelle le polymère (méth)acrylique (a) est le polyméthacrylate de méthyle (PMMA).

5. Composition de polymère selon l'une quelconque des revendications 1 à 4, dans laquelle la composition de polymère comprend
(a) 65,0 à 75,0 % en poids d'un polymère (méth)acrylique ; et
(b) 25,0 à 35,0 % en poids d'un copolymère préparé à l'aide de styrène et d'anhydride maléique vis-à-vis du poids total de (a) et (b).

6. Composition de polymère selon l'une quelconque des revendications 1 à 5 comprenant 0,10 à 1,00 % en poids d'au moins un antioxydant et/ou 0,10 à 1,00 % en poids d'au moins un stabilisant thermique vis-à-vis du poids total de la composition de polymère.

7. Composition de polymère selon l'une quelconque des revendications 1 à 6, dans laquelle l'extrudeuse à l'état fondu comprend au moins deux vis d'extrudeuse dans laquelle les vis d'extrudeuse sont en rotation conjointe ou en rotation contraire, et dans laquelle l'extrudeuse à l'état fondu est conçue de façon à assurer le transport du mélange d'apport de l'entrée d'apport à l'ouverture pour retirer la composition de polymère obtenue et assurer la soumission du mélange d'apport à une chaleur suffisante pour amener la composition de polymère dans le volume d'espace (iv) à avoir une température de ≥ 235 °C et ≤ 255 °C.

8. Composition de polymère selon l'une quelconque des revendications 1 à 7, dans laquelle pendant le mélange à l'état fondu la température de la composition de polymère dans le volume d'espace (iv) est ≥ 240 °C et ≤ 250 °C.

9. Article produit à l'aide de la composition de polymère selon l'une quelconque des revendications 1 à 8, dans lequel l'article a :
• une transmittance lumineuse telle que déterminée conformément à la norme ASTM D1003 (2000) de ≥ 90,0 % ;
• un trouble tel que déterminé conformément à la norme ASTM D1003 (2000) de ≤ 2,3 % ;
• une température de transition vitreuse telle que déterminée conformément à la norme ISO 11357-2 (2013) de ≥ 125 °C ;
• une température de fléchissement sous charge telle que déterminée conformément à la norme ISO 75-2 (2013), méthode B de ≥ 105 °C ; et/ou
• une température de ramollissement Vicat B telle que déterminée conformément à la norme ISO 306 (2013), à l'aide d'une force de 50 N et d'une vitesse d'échauffement de 120 K/h, de ≥ 110 °C.

10. Article selon la revendication 9, dans lequel l'article a une profondeur de rayure résiduelle telle que déterminée conformément à la norme ASTM 7187-10 de ≤ 1500 nm.
